# EUROPÄISCHE PATENTSCHRIFT

(11) **EP 0 546 130 B1**
(45) Veröffentlichungstag und Bekanntmachung des Hinweises auf die Patenterteilung: **28.02.1996**
(21) Anmeldenummer: 92912131.7
(22) Anmeldetag: 22.06.1992
(51) Int. Cl.: B29C 70/00, B29C 45/14, B29B 13/00

(54) **VERFAHREN ZUM HERSTELLEN VON MEHRSCHICHTIGEN FORMKÖRPERN**
PROCESS FOR PRODUCING MULTIPLE-LAYER MOULDED BODIES
PROCEDE DE FABRICATION DE CORPS MOULES A COUCHES MULTIPLES

(30) Priorität: 21.06.1991 DE 4120534; 11.03.1992 DE 9203235 U
(43) Veröffentlichungstag der Anmeldung: 16.06.1993
(73) Patentinhaber: METRAPLAST H. Jung GmbH, D-91130 Nidderau (DE)
(72) Erfinder: RIEDL, Jürgen, D-8580 Bayreuth (DE)
(74) Vertreter: Tergau, Enno, Dipl.-Ing.
(86) Internationale Anmeldenummer: DE9200511
(87) Internationale Veröffentlichungsnummer: WO9300216

(56) Entgegenhaltungen:
- EP-A- 0 103 377
- EP-A- 0 305 969
- DE-A- 2 114 181
- DE-A- 2 156 445
- US-A- 4 439 473
- US-A- 4 734 230
- PATENT ABSTRACTS OF JAPAN vol. 8, no. 195 (M-323)(1632) 7. September 1984 & JP-A-59 083 633 (SUMITOMO KAGAKU KOGYO K.K.) 15 May 1984

## Beschreibung

Die Erfindung betrifft ein Verfahren zum Herstellen von mehrschichtigen Formkörpern mit den im Oberbegriff des Anspruches 1 genannten Merkmalen.

Derartige Gegenstände finden vielfach Verwendung z.B. im Automobilbau als Armaturentafeln, Handschuhfachklappen, Mittelkonsolen, Seitentürverkleidungen u.dgl., aber auch für die Herstellung von Koffern, Kleinlederwaren, Möbeln u.ä.. Um bei den genannten Produkten eine taktil weiche Oberfläche zu erhalten, ist das beim späteren Gebrauch die Sichtoberfläche bildende Obermaterial auf seiner Rückseite mit Schaumstoff kaschiert. Zur Herstellung der genannten Formkörper wird im allgemeinen so vorgegangen, daß ein im wesentlichen flächiges, aus einem Obermaterial wie beispielsweise Leder und einer Schaumstoffschicht bestehendes flexibles Laminat in eine Spritzform eingelegt und von seiner Schaumstoffseite her mit einem thermoplastischen Kunststoff hinterspritzt wird. Ein derartiges Verfahren bzw. ein solcher Formkörper ist aus JP-A 59 083 bekannt.

Im Hinblick auf eine spätere Wiederverwertung insbesondere auf dem Kraftfahrzeugsektor haben die bisher verwendeten Formkörper den Nachteil, daß ihre in der Regel aus verschiedenen Materialien bestehenden Schichten so fest miteinander verbunden sind, daß sie praktisch nicht mehr getrennt und individuellen Wiederverwertungskreisläufen zugeführt werden können. Dies ist jedoch eine vielerseits insbesondere an die Automobilindustrie herangetragene Forderung.

Davon ausgehend ist es die Aufgabe der Erfindung, Formkörper insbesondere zur Ausstattung von Automobilen bereitzustellen, deren einzelne Schichten sich im Zuge der Alt-Auto-Entsorgung zu Wiederverwertungszwecken voneinander trennen lassen. Diese Aufgabe wird zunächst durch die kennzeichnenden Merkmale des Anspruches 1 gelöst. Danach wird auf die mit dem thermoplastischen Kunststoff zu verbindende Schaumstoffoberfläche ein Trennmittel aufgetragen, das die an der Oberfläche der Schaumstoffschicht offenen Poren des Schaumstoffes füllt und eine eine im wesentlichen glatte Oberfläche aufweisende Trennschicht zwischen Schaumstoffschicht und thermoplastischem Kunststoff bildet. Der beim Spritzvorgang auf die Schaumstoffschicht auftreffende thermoplastische Kunststoff wird auf diese Weise daran gehindert, in die offenen Schaumstoffporen einzudringen und sich mit der Schaumstoffschicht untrennbar zu verbinden. Ein weiterer sich günstig auf die spätere Trennbarkeit der beiden Schichten auswirkender Effekt liegt darin, daß durch die gewählte Zusammensetzung des Trennmittels eine Haftung zum thermoplastischen Kunststoff erreicht wird, die während des Gebrauchs des Formkörpers eine ausreichende Verbindungsfestigkeit gewährleistet und dennoch ein späteres relativ leichtes Trennen der Schichten erlaubt.

Ein weiterer Vorteil der Erfindung liegt darin, daß die Trennschicht eine Schutzwirkung vor dem beim Spritzvorgang mit relativ hohem Druck auf den Schaumstoff auftreffenden thermoplastischen Kunststoff ausübt. Bei den Verfahren nach dem Stande der Technik kommt es nämlich häufig dazu, daß die Schaumstoffschicht durch den aufgespritzten Kunststoff teilweise verdichtet oder stellenweise abgetragen wird. Als Folge davon treten ausgeprägte Unebenheiten des Obermaterials auf, was das betroffene Produkt in seiner Qualität erheblich mindert oder sogar zum Ausschußteil macht. Ein weiterer Vorteil der Erfindung besteht darin, daß aufgrund der Verwendung von Wasser als Dispersions- und Emulsionsmittel beim Spritzvorgang keine die Umwelt belastenden Dämpfe bzw. Gase freigesetzt werden.

Durch Versuche wurde gefunden, daß das Trennmittel insbesondere dann das spätere Trennen der Schichten des Formkörpers erleichtert, wenn eine Zusammensetzung gemäß den Ansprüchen 2 und 3 gewählt wird.

Die Zugabe eines Füllstoffes erhöht die Viskosität des Trennmittels nach Anspruch 4, so daß es auch bei Schaumstoffen mit relativ großen Poren verwendet werden kann. In Anspruch 5 ist eine vorteilhafte Zusammensetzung eines einen Füllstoff enthaltenden Trennmittels angegeben. Die Verwendung von Quarzmehl als Füllstoff ist insofern vorteilhaft, als dieser Stoff in großen Mengen vorhanden und dadurch billig und außerdem umweltverträglich ist.

Durch die Verwendung eines Naturkautschuks nach Anspruch 7 wird der Forderung nach möglichst umweltfreundlichen Herstellungsmethoden Rechnung getragen.

Die Lehre der Ansprüche 8-10 gewährleistet, daß auch das Obermaterial von der Schaumstoffschicht getrennt werden kann. Dies ist dann nötig, wenn diese beiden Schichten aus unterschiedlichen Materialien bestehen.

Die in den Ansprüchen 11 bis 14 genannten Maßnahmen bewirken, daß bei Obermaterialien mit einer Oberflächenstruktur diese beim Einformen in die Spritzform durch Dehnen und Stauchen und beim sich anschließenden Spritzvorgang durch Anpressen an die Formwandung nicht beeinträchtigt wird. Diese Gefahr tritt insbesondere beim Werkstoff Leder, aber auch bei anderen, z.B. ledersimulierenden Stoffen, Kunststoff-Dekorfolien, textilen Geweben u.ä. Produkten auf. Durch das Benetzen zumindest der Obermaterialrückseite mit einer Benetzungsflüssigkeit gemäß den Ansprüchen 11 bis 14 läßt sich das mit Schaumstoff kaschierte Oberflächenmaterial unter weitgehender Beibehaltung seines natürlichen Aussehens und unter Vermeidung von Falten, Rissen und/oder Brüchen zu beliebig räumlich geformten Gegenständen verarbeiten. Ein Abflachen von erhabenen Strukturen auf der Oberfläche des Obermaterials durch den beim Spritzvorgang herrschenden Spritzdruck wird zuverlässig verhindert.

Die Maßnahme gemäß den Ansprüchen 15 und 16 gewährleistet, daß temperaturempfindliche Materialen wie z.B. Leder in ihrem Erscheinungsbild und ihren taktilen Eigenschaften nicht beeinträchtigt werden. Außerdem hat es sich gezeigt, daß bei niedrigen Formwandungstemperaturen die negativen Auswirkungen der mit relativ hohem Druck und hoher Temperatur eingespritzten Kunststoffschmelze auf die Schaumstoffschicht bzw. bei Formkörpern ohne Schaumstoffschicht auf das Obermaterial selbst minimiert sind. Der Grund hierfür liegt vor allem in der durch einen Abschreckeffekt der Kunststoffschmelze an den Formwandungen hervorgerufenen Reduzierung der Fließgeschwindigkeit der Schmelze.

Eine weitere Lösung der eingangs genannten Aufgabe besteht im Falle von nicht mit Schaumstoff kaschierten Obermaterialien in der Merkmalskombination des Anspruches 17. Auch hier wird, wie bei der Lehre nach Anspruch 1, eine spätere Trennbarkeit zwischen Obermaterial und hinterspritztem Kunststoff erreicht. Bei Formkörpern, deren folienartiges Obermaterial nicht mit Schaumstoff kaschiert ist, wird vor dem Hinterspritzen mit Kunststoff zumindest die Rückseite des Obermaterials vor dem Einformen in eine Spritzform mit einer Benetzungsflüssigkeit behandelt. Die Flüssigkeit ist eine Mischung aus einem oder mehreren einwertigen Alkoholen mit 1-4 C-Atomen, einem oder mehreren Ketonen mit 1-6 C-Atomen, einem oder mehreren niedermolekularen Essigsäureestern und einem dreiwertigen Alkohol. Eine bevorzugte Benetzungsflüssigkeit enthält nach Anspruch 18 Aceton, Isopropylalkohol, Ethanol, Athylacetat und Glycerin. In Anspruch 19 sind bevorzugte Gehaltsbereiche der genannten Stoffe angegeben. Eine bevorzugte Zusammensetzung einer Benetzungsflüssigkeit nennt Anspruch 20.

Die Erfindung wird im folgenden anhand der beigefügten Zeichnungen näher erläutert. Es stellen dar:
- Fig. 1: eine an sich bekannte Spritzgießapparatur vereinfacht im Längsschnitt im geöffneten Zustand,
- Fig. 2: die Apparatur gem. Fig. 1 im geschlossenen Zustand und
- Fig. 3: eine perspektivische, den Schichtenaufbau eines mit dem erfindungsgemäßen Verfahren hergestellten Formkörpers zeigende Darstellung.

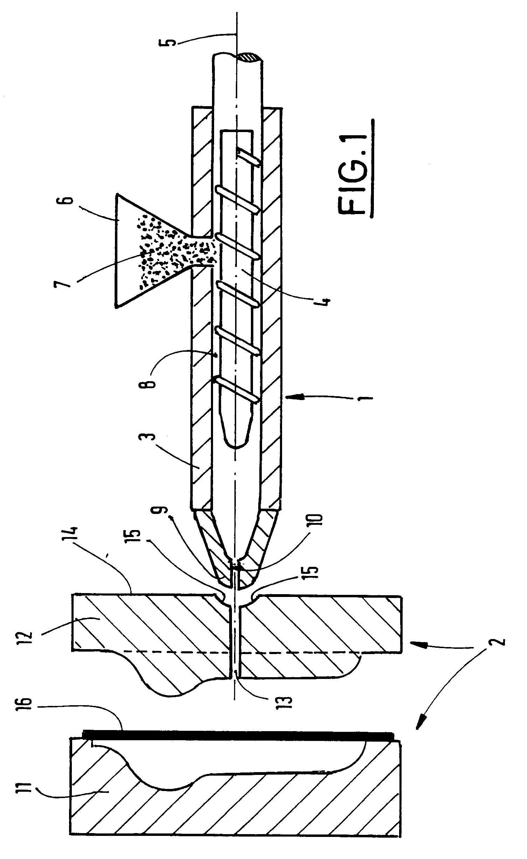

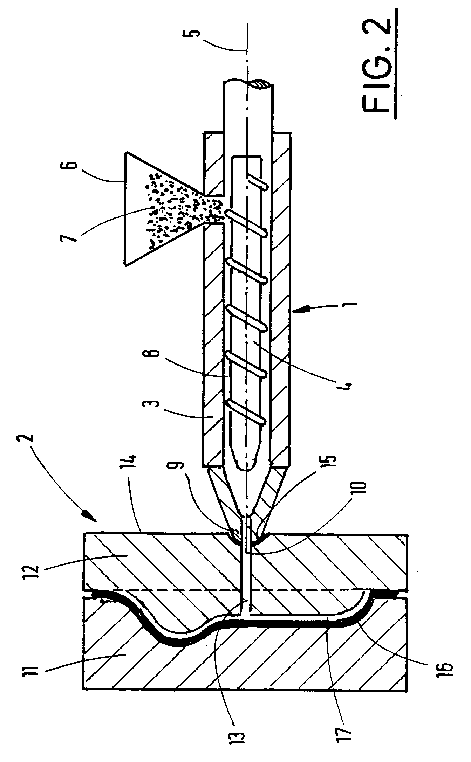

Die in Fig. 1 und 2 dargestellte Apparatur ist eine von mehreren Möglichkeiten zur Ausführung des erfindungsgemäßen Verfahrens. Sie besteht aus zwei Hauptteilen, nämlich dem Extruder 1 und einer daran extrusionsseitig anzuschließenden Spritzgießform 2.

Der Extruder besteht im wesentlichen aus einem mit einer Heizwicklung (nicht dargestellt) ausgerüsteten Extrudergehäuse 3 und einer darin angeordneten Schnecke 4, die um ihre Längsachse 5 drehbar ist und in Richtung der Längsachse hin- und herbewegt werden kann.

Das Extrudergehäuse 3 ist mit einem Eingabetrichter 6 ausgerüstet, durch den das aufzuschmelzende und in die Spritzgießform 2 einzuspritzende thermoplastische Kunststoffgranulat 7 in den Schneckenraum 8 des Extrudergehäuses 3 einbringbar ist. Das Extrudergehäuse 3 weist des weiteren ein Extrusionsmundstück 9 auf, das kalottenartig konkav nach vorn gewölbt ist und einen zentralen Extrusionskanal 10 aufweist.

Die Spritzgießform 2 besteht aus zwei miteinander verspannbaren Halbschalen 11,12. Die Halbschale 12 ist an das Extrusionsmundstück 9 des Extruders 1 anschließbar und weist einen etwa mittig angeordneten und koaxial zum Extrusionskanal 10 verlaufenden Einspritzkanal 13 auf, der in eine auf der dem Extrudergehäuse zugewandten Seite 14 der Halbschale 12 angeordneten, konvexen Ausmuldung 15 mündet. Die kalottenartige Vorwölbung des Extrusionsmundstückes 9 bildet mit der Ausmuldung 15 eine schmelze-dichte Verbindung mit dem Extrudergehäuse 3.

Das erfindungsgemäße Verfahren kann mit Hilfe der hier nur schematisch erläuterten Apparatur wie folgt ausgeführt werden. Zunächst wird das Obermaterial, das in dem geschilderten Ausführungsbeispiel Leder sein soll, auf seiner Rück- bzw. Fleischseite mit einer Benetzungsflüssigkeit besprüht, die aus 19,5 Teilen Aceton, 19,5 Teilen Isopropylalkohol, 20,5 Teilen Ethanol, 5,5 Teilen Ethylacetat und 35,0 Teilen Glycerin (85% DAB 9) besteht.

Das derart behandelte, in Form größerer Flächenstücke oder kleinerer Zuschnitte vorliegende Leder kann nun entweder nach einer kurzen Einwirkungszeit von wenigen Minuten verarbeitet oder zunächst zwischengelagert werden. Bei der Zwischenlagerung ist naturgemäß dafür zu sorgen, daß das Benetzungsmittel nicht verdampft, was aber unter Produktionsbedingungen leicht möglich ist, wenn die besprühten Lederteile aufeinandergestapelt und so im Stapel gelagert werden.

Nach der kurzen Einwirkzeit von einigen Minuten oder der Zwischenlagerung, die auch mehrere Stunden dauern kann, wird die Rückseite des Leders mit einer Polyurethan-Schaumstoffschicht kaschiert. Dazu wird sie zunächst mit einem Klebstoff eingestrichen und dann die Schaumstoffschicht aufgelegt und angepreßt. Der Klebstoff ist im wesentlichen eine Mischung aus einer Silikonemulsion und der Dispersion eines sich aus Vinylacetat, Ethylen und Acetylsäureester zusammensetzenden Terpolymers. Als Emulsions- bzw. Dispersionsmittel wird Wasser verwendet. Der Klebstoff enhält 60 Teile der Terpolymer-Dispersion, 39,5 Teile Wasser und 0,5 Teile der Silikonemulsion. Der Wasseranteil der Terpolymer-Dispersion beträgt 30 Massen-%, jener der Silikonemulsion 60 Massen-%.

Bevor das auf diese Weise erhaltene, aus Leder (Obermaterial 19) und Schaumstoffschicht 22 bestehende Laminat 16 in die Halbschale 11 eingelegt wird, wird die Oberfläche der Schaumstoffschicht mit einem Trennmittel eingestrichen, um die offenen Poren an der Oberfläche des Schaumstoffs zu füllen und eine Trennschicht 18 zwischen der Schaumstoffschicht und dem im anschließenden Spritzvorgang aufgespritzten thermoplastischen Kunststoff zu erzeugen. Das Trennmittel setzt sich zusammen aus 98 Teilen einer wässrigen Naturkautschuk-Dispersion mit 70 Massen-% Kautschukgehalt und 2 Teilen einer wässrigen Silikonemulsion mit 40 Massen-% Silikonölanteil.

Wenn der verwendete Schaumstoff relativ große Poren aufweist, wird dem Trennmittel zusätzlich Quarzmehl als Füllmittel beigemischt. Das Trennmittel enthält in diesem Fall 94 Teile wässrige Naturkautschuk-Dispersion, 2 Teile wässrige Silikonemulsion und 4 Teile Quarzmehl.

Nach dem Auftragen des Trennmittels kann das Laminat 16 in die Halbschale 11 der Spritzgießform 2 eingelegt werden, wobei dafür gesorgt wird, daß es die vorhandenen Ecken und Formmulden paßgerecht ausfüllt. Die Form wird dann geschlossen und an dem Extrudergehäuse 3 angebracht, wie dies in Fig. 2 gezeigt ist. Sodann wird die Heizung des Extruders eingeschaltet und die Schnecke 4 in Drehung versetzt. Dadurch wird das im Extruder vorhandene thermoplastische Kunststoffgranulat, z.B. Acrylnitrid-Butadien-Styrol-Copolymer, Polypropylen oder eine Mischung aus Polypropylen und einem Terpolymer aus Ethylen, Propylen und einem Dien, plastifiziert. Ist die Schmelze gießbereit, so wird die Schnecke 4 in Richtung auf die Spritzgießform 2 vorgestoßen und der sich zwischen dem Laminat 16 und der Halbschale 12 befindliche Hohlraum 17 mit Schmelze gefüllt. Nach dem Füllen der Form wird diese über eine Kühleinrichtung (nicht dargestellt) gekühlt. Die Extruderschnecke 4 behält dabei in der Regel ihre Drehbewegung bei, so daß die Schmelze unter einem gewissen Druck steht, wodurch das durch den Abkühlungsvorgang hervorgerufene Schrumpfvolumen der Schmelze durch dauernd nachgelieferte Schmelze ausgefüllt wird. Nach Abschluß des Erstarrungsvorganges wird die Schnecke 4 angehalten, die beiden Halbschalen 11,12 voneinander getrennt und das fertige Produkt entnommen.

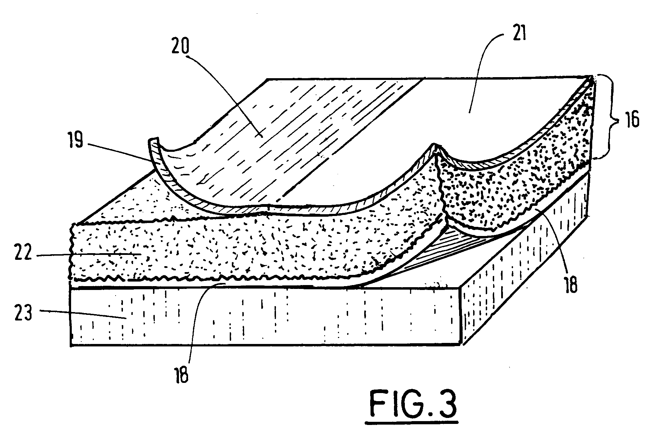

Der Aufbau eines mit dem im vorgenannten beschriebenen Verfahren hergestellten Formkörpers geht aus Fig. 3 hervor. Das die Sichtoberfläche des Formkörpers bildende Obermaterial 19 besteht vorzugsweise aus echtem Leder. Es können aber z.B. auch textile Stoffe oder ledersimulierende Kunststoffolien etc. verwendet werden. Das Obermaterial 19 kann auch aus zwei oder mehreren Teilzuschnitten 20,21 aus unterschiedlichen Materialien, beispielsweise aus Holz und aus Leder, zusammengesetzt sein. Die Rückseite des Obermaterials 19 ist mit einer Polyurethan-Schaumstoffschicht unter Verwendung des weiter oben beschriebenen Klebstoffes kaschiert. Obermaterial 19 und Schaumstoffschicht 22 bilden zusammen das im wesentlichen flexible Laminat 16. Auf der dem Obermaterial abgewandten Unterseite der Schaumstoffschicht befindet sich die durch das Trennmittel erzeugte Trennschicht 18. Mit dieser Trennschicht haftet das Laminat an der dem Formkörper seine räumliche Gestalt und Stabilität verleihenden Trägerschicht 23 aus thermoplastischem Kunststoff. Wie an den Stellen A und B der Fig. 3 angedeutet, lassen sich die drei Hauptschichten eines mit dem erfindungsgemäßen Verfahren hergestellten Formkörpers, nämlich Obermaterial 19, Polyurethan-Schaumstoffschicht 22 und Trägerschicht 23, voneinander trennen. Die Trennschicht 18, die in Fig. 3 aus zeichnerischen Gründen im Verhältnis zu den anderen Schichten sehr viel dicker als in Wirklichkeit dargestellt ist, bleibt dabei zum größten Teil an der Polyurethan-Schaumstoffschicht 22 haften.

Abschließend sei bemerkt, daß bei nur aus Obermaterial 19 und thermoplastischem Kunststoff (Trägerschicht 23) bestehenden Formkörpern allein das Behandeln der Obermaterial-Rückseite mit der oben beschriebenen Benetzungsflüssigkeit ein späteres Abtrennen des Obermaterials 19 von der Trägerschicht 23 ermöglicht.

## Patentansprüche

1. Verfahren zum Herstellen von mehrschichtigen Formkörpem durch Hinterspritzen eines im wesentlichen flexiblen, aus einem folienartigen Obermaterial (19) wie Leder oder textilen Stoffen und einer mit dessen Rückseite verbundenen Schaumstoffschicht (22) bestehenden Laminats (16), mit folgenden Verfahrensschritten:
a) Einformen des Laminats (16) in eine Spritzgießform (2),
b) Schließen der Spritzform,
c) Hinterspritzen des Laminats (16) von dessen Schaumstoffseite her mit einem thermoplastischen Kunststoff,
d) Abkühlen des Spritzlings in der Form,
e) Öffnen der Form und Entnahme des Produkts,
dadurch gekennzeichnet,
daß vor dem Einformen des Laminats (16) in die Spritzform (2) ein eine Trennschicht (18) zwischen Schaumstoffschicht (22) und thermoplastischem Kunststoff (Trägerschicht 23) bildendes Trennmittel auf die Schaumstoffoberfläche des Laminats aufgetragen wird, das eine Mischung aus einer wässrigen Kautschuk-Dispersion und einer wässrigen Silikonemulsion enthält.

2. Verfahren nach Anspruch 1,
dadurch gekennzeichnet,
daß das Trennmittel
97,0 - 99,5 Teile der Kautschuk-Dispersion und
0,5 - 3,0 Teile der Silikonemulsion
enthält,
mit der Maßgabe, daß die Addition der Teile 100 ergibt.

3. Verfahren nach Anspruch 2,
dadurch gekennzeichnet,
daß die Kautschuk-Dispersioin 60-80 Massen-% Kautschuk und die Silikonemulsion 30-40 Massen-% Silikonöl enthält.

4. Verfahren nach einem oder mehreren der vorhergehenden Ansprüche,
dadurch gekennzeichnet,
daß das Trennmittel zusätzlich einen Füllstoff enthält.

5. Verfahren nach Anspruch 4,
dadurch gekennzeichnet,
daß das Trennmittel
90,0 - 98,5 Teile der Kautschuk-Dispersion,
1,0 - 7,0 Teile Füllstoff und
0,5 - 3,0 Teile Silikonemulsion enthält,
mit der Maßgabe, daß die Addition der Teile 100 ergibt.

6. Verfahren nach Anspruch 5,
dadurch gekennzeichnet,
daß der Füllstoff Quarzmehl ist.

7. Verfahren nach einem oder mehreren der vorgenannten Ansprüche,
dadurch gekennzeichnet,
daß der Kautschuk ein Naturkautschuk ist.

8. Verfahren nach einem oder mehreren der vorgenannten Ansprüche,
dadurch gekennzeichnet,
daß Obermaterial (19) und Schaumstoffschicht (22) des Laminats (16) mit einem Klebstoff verbunden sind, der im wesentlichen eine Mischung aus einer Silikonemulsion und einer Dispersion eines aus Vinylacetat, Ethylen und Acrylsäureester aufgebauten Terpolymers ist.

9. Verfahren nach Anspruch 8,
dadurch gekennzeichnet,
daß die Dispersion 60-80 Massen-% Terpolymer und die Silikonemulsion 30-40 Massen-% Silikonöl enthält.

10. Verfahren nach Anspruch 9,
gekennzeichnet durch,
folgende Zusammensetzung des Klebstoffs:
56,7-62,9 Teile Terpolymer
36,6-43,2 Teile Wasser
0,1- 0,5 Teile Silikonemulsion,
mit der Maßgabe, daß sich die Teile zu 100 addieren.

11. Verfahren nach Anspruch 10,
dadurch gekennzeichnet,
daß vor dem Verkleben von Obermaterial (19) und Schaumstoffschicht (22) zumindest die der Schaumstoffschicht zugewandte Rückseite des Obermaterials mit einer Benetzungsflüssigkeit behandelt wird, die eine Mischung ist aus
- einem oder mehreren einwertigen Alkoholen mit 1-4 C-Atomen,
- einem oder mehreren Ketonen mit 1-6 C-Atomen,
- einem oder mehreren niedermolekularen Essigsäureestern und
- einem dreiwertigen Alkohol.

12. Verfahren nach Anspruch 11,
dadurch gekennzeichnet,
daß die Benetzungsflüssigkeit Aceton, Ispopropylalkohol, Ethanol, Ethylacetat und Glycerin enthält.

13. Verfahren nach Anspruch 12,
dadurch gekennzeichnet,
daß sich die Benetzungsflüssigkeit wie folgt zusammensetzt:
10-25 Teile Aceton,
10-25 Teile Isopropylalkohol,
10-25 Teile Ethanol,
3-10 Teile Ethylacetat,
20-50 Teile Glycerin,
mit der Maßgabe, daß die Addition der Teile 100 ergibt.

14. Verfahren nach Anspruch 13,
gekennzeichnet durch eine Benetzungsflüssigkeit mit folgender Zusammensetzung: 19,5 Teile Aceton,
19,5 Teile Isopropylalkohol,
20,5 Teile Ethanol,
5,5 Teile Ethylacetat,
35,0 Teile Glycerin (85% DAB 9),
mit der Maßgabe, daß die Addition der Teile 100 ergibt.

15. Verfahren nach einem oder mehreren der vorgenannten Ansprüche,
dadurch gekennzeichnet,
daß die Formwandungen der Spritzgießform beim Einspritzen der Kunststoffschmelze eine möglichst niedrige Temperatur aufweisen.

16. Verfahren nach Anspruch 15,
dadurch gekennzeichnet,
daß die Temperatur der Formwandungen zwischen 20 °C und 50 °C liegt.

17. Verfahren zum Herstellen von mehrschichtigen Formkörpern durch Hinterspritzen eines im wesentlichen flexiblen, aus einem folienartigen Obermaterial (19) wie Leder oder textilen Stoffen, mit folgenden Verfahrensschritten:
a) Einformen des Obermaterials 19 in eine Spritzgießform 2,
b) Schließen der Spritzgießform,
c) Hinterspritzen des Obermaterials 19 mit einem thermoplastischen Kunststoff,
d) Abkühlen des Spritzlings in der Form,
e) Öffnen der Form und Entnahme des Produkts,
dadurch gekennzeichnet, daß
zumindest die Rückseite des Obermaterials 19 vor dem Einformen in die Spritzform 2 mit einer Benetzungsflüssigkeit behandelt wird, die eine Mischung ist aus
- einem oder mehreren einwertigen Alkokolen mit 1-4 C-Atomen,
- einem oder mehreren Ketonen mit 1-6 C-Atomen,
- einem oder mehreren niedermolekuIaren-Essigsäureestem und
- einem dreiwertigen Alkohol.

18. Verfahren nach Anspruch 17,
dadurch gekennzeichnet,
daß die Benetzungsflüssigkeit Aceton, Isopropylalkol, Ethanol, Ethylacetat und Glycerin enthält.

19. Verfahren nach Anspruch 18,
dadurch gekennzeichnet,
daß sich die Benetzungsflüssigkeit wie folgt zusammensetzt:
10-25 Teile Aceton,
10-25 Teile Isopropylalkohol,
10-25 Teile Ethanol,
3-10 Teile Ethylacetat,
20-50 Teile Glycerin,
mit der Maßgabe, daß die Addition der Teile 100 ergibt.

20. Verfahren nach Anspruch 19,
gekennzeichnet durch
eine Benetzungsflüssigkeit mit folgender Zusammensetzung:
19,5 Teile Aceton,
19,5 Teile Isopropylalkohol,
20,5 Teile Ethanol,
5,5 Teile Ethylacetat,
35,0 Teile Glycerin (85 % DAB 9),
mit der Maßgabe, daß die Addition der Teile 100 ergibt.

## Claims

1. A method for producing multilayer moulded bodies by injection moulding on the back of a substantially flexible laminate (16) consisting of a sheet-like top material (19), such as leather or textile fabrics, and a foam material layer (22) bonded to its back, with the following steps of the method:
a) fitting the laminate (16) into an injection mould (2),
b) closing the injection mould,
c) injecting a thermoplastic synthetic material onto the back of the laminate (16) from its foamed material side,
d) cooling the injected product in the mould,
e) opening the mould and extracting the product,
characterized in that
before the laminate (16) is fitted into the injection mould (2) a release agent, forming a release layer (18) between the foam material layer (22) and the thermoplastic synthetic material (carrier layer 23), is applied to the surface of the foam material of the laminate, which release agent contains a mixture of an aqueous rubber dispersion and an aqueous silicone emulsion.

2. A method according to claim 1,
characterized in that
the release agent contains
97.0 - 99.5 parts of the rubber dispersion and
0.5 - 3.0 parts of the silicone emulsion
with the proviso that the addition of the parts amounts to 100.

3. A method according to claim 2,
characterized in that
the rubber dispersion contains 60 - 80 mass % of rubber and the silicone emulsion 30 - 40 mass % of silicone oil.

4. A method according to one or more of the preceding claims,
characterized in that
the release agent additionally contains a filler.

5. A method according to claim 4,
characterized in that
the release agent contains
90.0 - 98.5 parts of the rubber dispersion
1.0 - 7.0 parts of the filler and
0.5 - 3.0 parts of the silicone emulsion,
with the proviso that the addition of the parts amounts to 100.

6. A method according to claim 5,
characterized in that
the filler is a quartz powder.

7. A method according to one or more of the above mentioned claims,
characterized in that
the rubber is a natural rubber.

8. A method according to one or more of the above mentioned claims,
characterized in that
the top material (19) and the foam material layer (22) of the laminate (16) are bonded together by an adhesive which is in essence a mixture of a silicone emulsion and of a dispersion of a terpolymer composed of vinyl acetate, ethylene and an acrylic acid ester.

9. A method according to claim 8,
characterized in that
the dispersion contains 60 - 80 mass % of terpolymer and the silicone emulsion 30- 40 mass % of silicone oil.

10. A method according to claim 9,
characterized by
the following composition of the adhesive:
56.7 - 62.9 parts terpolymer
36.6 - 43.2 parts water
0.1 - 0.5 parts silicone emulsion
with the proviso that the parts add up to 100.

11. A method according to claim 10,
characterized in that
before the top material (19) and the foam material layer (22) are glued together, at least the back of the top material facing the foam material layer is treated by a wetting liquid which is a mixture of
- one or more monohydric alcohols with 1-4 C-atoms,
- one or more ketones with 1-6 C-atoms,
- one or more low molecular acetic acid esters and
- a trihydric alcohol.

12. A method according to claim 11,
characterized in that
the wetting liquid contains acetone, isopropyl alcohol, ethanol, ethyl acetate and glycerine.

13. A method according to claim 12,
characterized in that
the wetting liquid has the following composition:
10 - 25 parts acetone,
10 - 25 parts isopropyl alcohol,
10 - 25 parts ethanol,
3 - 10 parts ethyl acetate,
20 - 50 parts glycerine,
with the proviso that the addition of the parts amounts to 100.

14. A method according to claim 13,
characterized by a wetting liquid with the following composition:
19.5 parts acetone,
19.5 parts isopropyl alcohol,
20.5 parts ethanol,
5.5 parts ethyl acetate
35.0 parts glycerine (85% DAB 9)
with the proviso that the addition of the parts amounts to 100.

15. A method according to one or more of the preceding claims,
characterized in that
the mould walls of the injection mould have a temperature that is as low as possible when the plastic melt is injected.

16. A method according to claim 15,
characterized in that
the temperature of the mould walls lies between 20° C and 50° C.

17. A method for producing multilayer moulded bodies by injection moulding onto the back of a substantially flexible sheet-like top material (19) such as leather or textile fabrics, with the following steps of the method:
a) fitting the top material (19) into an injection mould (2)
b) closing the injection mould,
c) injecting a thermoplastic synthetic material onto the back of the top material (19),
d) cooling the injected product in the mould,
e) opening the mould and extracting the product,
characterized in that
before being fitted into the injection mould (2), at least the back of the top material (19) is treated with a wetting liquid which is a mixture of
- one or more monohydric alcohols with 1-4 C-atoms,
- one or more ketones with 1-6 carbon atoms,
- one or more low molecular acetic acid esters and
- a trihydric alcohol.

18. A method according to claim 17,
characterized in that
the wetting liquid contains acetone, isopropyl alcohol, ethanol, ethyl acetate and glycerine.

19. A method according to claim 18,
characterized in that
the wetting liquid is composed as follows:
10 - 25 parts acetone,
10 - 25 parts isopropyl alcohol,
10 - 25 parts ethanol,
3 - 10 parts ethyl acetate,
20 - 50 parts glycerine,
with the proviso that the addition of the parts amounts to 100.

20. A method according to claim 19,
characterized by
a wetting liquid with the following composition:
19.5 parts acetone,
19.5 parts isopropyl alcohol,
20.5 parts ethanol,
5.5 parts ethyl acetate,
35.0 parts glycerine, (85 % DAB 9)
with the proviso that the addition of the parts amounts to 100.

## Revendications

1. Procédé de production de corps moulés multicouches par injection dorsale sur un stratifié (16) sensiblement flexible, composé d'un matériau de dessus (19) de type feuille tel que cuir ou étoffes textiles, et d'une couche de matière alvéolaire (22) jointe à sa face dorsale, comportant les étapes suivantes :
a) introduction du stratifié (16) dans un moule peur injection (2),
b) fermeture du moule pour injection,
c) injection d'une matière thermoplastique au dos du stratifié (16), du côté matière alvéolaire,
d) refroidissement du produit de l'injection dans le moule,
e) ouverture du moule et démoulage du produit,
caractérisé en ce que
un agent de séparation formant une couche de séparation (18) entre la couche de matière alvéolaire (22) et la matière thermoplastique (couche support 23) est déposé avant l'introduction du stratifié (16) dans le moule peur injection (2) à la surface de la matière alvéolaire du stratifié, lequel agent contient un mélange d'une dispersion aqueuse de caoutchouc et d'une émulsion aqueuse de silicone.

2. Procédé selon la revendication 1, caractérisé en ce que l'agent de séparation contient
97,0 à 99,5 parties de dispersion de caoutchouc et
0,5 à 3,0 parties d'émulsion de silicone,
à la condition que la somme des parties donne 100.

3. Procédé selon la revendication 2, caractérisé en ce que la dispersion de caoutchouc contient 60 à 80 % en masse de caoutchouc et que l'émulsion de silicone contient 30 à 40 % en masse d'huile de silicone.

4. Procédé selon une ou plusieurs des revendications précédentes, caractérisé en ce que l'agent de séparation contient en outre une matière de charge.

5. Procédé selon la revendication 4, caractérisé en ce que l'agent de séparation contient
90,0 à 98,5 parties de dispersion de caoutchouc,
1,0 à 7,0 parties de matière de charge et
0,5 à 3,0 parties d'émulsion de silicone,
à la condition que la somme des parties donne 100.

6. Procédé selon la revendication 5, caractérisé en ce que la matière de charge est de la poudre de quartz.

7. Procédé selon une ou plusieurs des revendications précédentes, caractérisé en ce que le caoutchouc est un caoutchouc naturel.

8. Procédé selon une ou plusieurs des revendications précédentes, caractérisé en ce que le matériau de dessus (19) et la couche de matière alvéolaire (22) du stratifié (16) sont joints par une colle qui est sensiblement un mélange d'une émulsion de silicone et d'une dispersion d'un terpolymère composé d'acétate de vinyle, d'éthylène et d'acrylate.

9. Procédé selon la revendication 8, caractérisé en ce que la dispersion contient 60 à 80 % en masse de terpolymère et que l'émulsion de silicone contient 30 à 40 % en masse d'huile de silicone.

10. Procédé selon la revendication 9, caractérisé par la composition suivante de la colle :
56,7 à 62,9 parties de terpolymère,
36,6 à 43,2 parties d'eau,
0,1 à 0,5 partie d'émulsion de silicone,
à la condition que les parties donnent une somme de 100.

11. Procédé selon la revendication 10, caractérisé en ce qu'avant le collage du matériau de dessus (19) à la couche alvéolaire (22) au moins la face dorsale du matériau de dessus tournée vers la couche de matière alvéolaire est traitée par un liquide de mouillage qui est un mélange de
- un ou plusieurs alcools monovalents contenant 1 à 4 atomes de carbone,
- une ou plusieurs cétones contenant 1 à 6 atomes de carbone,
- un ou plusieurs acétates de masse moléculaire faible et
- un alcool trivalent.

12. Procédé selon la revendication 11, caractérisé en ce que le liquide de mouillage contient de l'acétone, de l'alcool isopropylique, de l'éthanol, de l'acétate d'éthyle et du glycérol.

13. Procédé selon la revendication 12, caractérisé en ce que le liquide de mouillage a la composition suivante :
10 à 15 parties d'acétone,
10 à 25 parties d'alcool isopropylique,
10 à 25 parties d'éthanol,
3 à 10 parties d'acétate d'éthyle,
20 à 50 parties de glycérol,
à la condition que la somme des parties donne 100.

14. Procédé selon la revendication 13, caractérisé par un liquide de mouillage ayant la composition suivante :
19,5 parties d'acétone,
19,5 parties d'alcool isopropylique,
20,5 parties d'éthanol,
5,5 parties d'acétate d'éthyle
35,0 parties de glycérol (à 85 % DAB 9),
à la condition que la somme des parties donne 100.

15. Procédé selon une ou plusieurs des revendications précédentes, caractérisé en ce que les parois du moule pour injection présentent une température aussi basse que possible lors de l'injection de la masse de matière plastique fondue.

16. Procédé selon la revendication 15, caractérisé en ce que la température des parois du moule est comprise entre 20°C et 50°C.

17. Procédé de production de corps moulés multicouches par injection au dos d'un matériau de dessus (19) sensiblement flexible de type feuille telle que cuir et étoffes textiles, comportant les étapes suivantes :
a) introduction du matériau de dessus (19) dans un moule pour injection (2),
b) fermeture du moule pour injection,
c) injection d'une matière thermoplastique au dos du matériau de dessus (19),
d) refroidissement du produit de l'injection dans le moule,
e) ouverture du moule et démoulage du produit,
caractérisé en ce que
au moins la face dorsale du matériau de dessus (19) est traitée avant l'introduction dans le moule pour injection (2) par un liquide de mouillage qui est un mélange composé de :
- un ou plusieurs alcools monovalents comportant 1 à 4 atomes de carbone,
- une ou plusieurs cétones comportant 1 à 6 atomes de carbone,
- un ou plusieurs acétates de masse moléculaire faible et
- un alcool trivalent.
- un alcool trivalent.

18. Procédé selon la revendication 17, caractérisé en ce que le liquide de mouillage contient de l'acétone, de l'alcool isopropylique, de l'éthanol, de l'acétate d'éthyle et du glycérol.

19. Procédé selon la revendication 18, caractérisé en ce que le liquide de mouillage a la composition suivante :
10 à 25 parties d'acétone,
10 à 25 parties d'alcool isopropylique,
10 à 25 parties d'éthanol,
3 à 10 parties d'acétate d'éthyle,
20 à 50 parties de glycérol,
à la condition que la somme des parties donne 100.

20. Procédé selon la revendication 19, caractérisé par un liquide de mouillage ayant la composition suivante :
19,5 parties d'acétone,
19,5 parties d'alcool isopropylique,
20,5 parties d'éthanol,
5,5 parties d'acétate d'éthyle,
35,0 parties de glycérol (à 85 % DAB 9),
à la condition que la somme des parties donne 100.
